# EUROPEAN PATENT SPECIFICATION

(11) **EP 2 021 302 B1**
(45) Date of publication and mention of the grant of the patent: **30.10.2013**
(21) Application number: 06725672.7
(22) Date of filing: 10.04.2006
(51) Int. Cl.: C04B 35/582, C04B 35/577, C04B 35/64

(54) **PROCESS FOR THE PREPARATION OF DENSE ULTRA-HIGH-TEMPERATURE COMPOSITE PRODUCTS**
VERFAHREN ZUR HERSTELLUNG VON DICHTEN ULTRAHOCHTEMPERATUR-VERBUNDPRODUKTEN
PROCÉDÉ POUR LA PRÉPARATION DE PRODUITS COMPOSITES DENSES À ULTRA-HAUTE TEMPÉRATURE

(43) Date of publication of application: 11.02.2009
(73) Proprietor: UNIVERSITA DEGLI STUDI DI CAGLIARI, 09124 Cagliari (IT)
(72) Inventor: CAO, Giacomo, I-09129 Cagliari (IT); ORRU', Roberto, Cagliari, 09127 (IT); LICHERI, Roberta, I-09045 Quartu S. Elena (IT); LOCCI, Antonio Mario, Sestu, 09128 (IT)
(74) Representative: Cattaneo, Elisabetta
(86) International application number: PCT/EP2006/061472
(87) International publication number: WO 2007/115592

(56) References cited:
- US-A- 5 217 816
- US-A- 5 750 450
- MEDRI V; MONTEVERDE F; BALBO A; BELLOSI A: "Comparison of ZrB2-ZrC-SiC composites fabricated by spark plasma sintering and hot-pressing" ADVANCED ENGINEERING MATERIALS, vol. 7, no. 3, March 2005 (2005-03), pages 159-163, XP002420358 Wiley-VCH Verlag GmbH, Germany
- BELLOSI A; MONTEVERDE F; SCITI D: "Fast densification of ultra-high-temperature ceramics by spark plasma sintering" INTERNATIONAL JOURNAL OF APPLIED CERAMIC TECHNOLOGY, vol. 3, no. 1, 31 January 2006 (2006-01-31), pages 32-40, XP002420359 American Ceramic Soc.; Blackwell Publishing, USA

## Description

### FIELD OF THE INVENTION

The present invention relates to the field of the preparation processes of advanced materials, and in particular to a process for the preparation of Ultra High Temperature Composite materials in bulk form.

### STATE OF THE ART

The so-called Ultra High Temperature Ceramics/Composites (hereinafter referred to as "UHTC") are ceramic-based materials which possess extremely high melting points, i.e. higher that 3000°C, which make them suitable as Thermal Protection Systems (TPS). In this contest, particular interest is focused on metal refractory borides such as Zirconium diboride (ZrB₂) and Hafnium diboride (HfB₂), which are considered potential candidate materials as TPS for space vehicles [Savino et al., Aerospace Science and Technology 9(2), 151-160, (2005)].

Moreover, it is also well established that the addition of Silicon carbide (SiC) to these diboride materials strongly improves their oxidation resistance at high temperature and room temperature strength. Regarding the relatively higher oxidation resistance, it was in fact demonstrated that pure diborides materials are oxidized remarkably above 1200°C due to the formation of the very volatile B₂O₃, while the presence of SiC in the range 20-25 vol % promotes the formation of borosilicate glasses which protect the material from oxidation up to 1500°C [Monteverde et al., J. Electrochem. Soc., 150(11), B552-B559, (2003)].

Therefore, ZrB₂-SiC- and HfB₂-SiC-based composites, have been investigated by several researchers and various techniques for their preparation have been developed.

Most of the methods proposed in the literature for the obtainment of ZrB₂-SiC-based products in bulk form, make use of the Hot Pressing (HP) technique. In particular, most of them take advantage of the HP technique for "pure sintering/consolidation" purposes, i.e. starting from commercial ZrB₂ and SiC powders.

On the other hand, the reaction synthesis and densification in one step of the ZrB₂-SiC composite (ZrB₂/SiC molar ratio equal to 2) by reactive hot pressing (RHP) starting from Zirconium (Zr), Silicon tetraboride (SiB₄) and graphite (C) [Opeka et a/., J. Eur. Ceram. Soc., 19, 2404-2414 (1999)] or Zirconium (Zr), Boron carbide (B₄C) and Silicon (Si) [Zhang et al., J. Eur. Ceram. Soc., 24, 171-178 (2004)], was also accomplished.

Regardless of the two possible options, i.e. sintering or synthesis and densification in a single step, the main concern regarding the use of traditional hot pressing approach is related to its low heating rates which lead to relatively long processing times (typically of the order of hours).

For instance, it was reported [Chamberlain et al., J. Am. Ceram. Soc., 87(6), 1170-1172 (2004)] that 450 min (T = 1900°C, P =32 MPa) was the total time required to obtain a near full dense ZrB₂/20-30 vol% SiC by hot pressing, when starting from commercially available ZrB₂ and SiC powders.

In order to facilitate sintering phenomena, it was suggested to add some ceramic nitrides (Si₃N₄, ZrN) as sintering aid to the starting powder mixture. However, also in these cases, due to the relatively low heating rate (about 20°C/min) the total sintering time was about 100 min (T=1870-1900°C) either when preparing ZrB₂/20 vol% SiC/4-5 vol % Si₃N₄ [Monteverde et al., J. Electrochem. Soc., 150(11), B552-B559, (2003)] or ZrB₂/15 vol% SiC/4.5 vol % ZrN [Monteverde et al., Solid State Sci., 7, 622-630, (2005)].

Analogous considerations can be made when the synthesis and consolidation of ZrB₂/25 vol.% SiC was carried out in one step by Hot Pressing (HP). In fact, the synthesis/densification time required to obtain 96.7-97.7% dense product was about 240 min (T=1900°C) when starting from Zr, Si and B₄C [Zhang et al., J. Eur. Ceram. Soc., 24, 171-178 (2004)]. In addition, when the Reactive Hot Pressing (RHP) of ZrB₂/25 vol%SiC was accomplished starting from Zr, SiB₄ and C [Opeka et al., J. Eur. Ceram. Soc., 19, 2404-2414 (1999)], the holding time required to complete the chemical reaction was 1 hour (T=1750°C, P=5 MPa) and ceramic densification was reached after additional 30 min (T=2100°C, P = 20 MPa). However, it should be noted that, in order to calculate the total duration of the synthesis/consolidation process, the heating time, which was not specified by Opeka et al., has still to be added to the total holding time (90 min) previously considered.

"US 5,750,450 relates to high temperature ablation resistant ceramic compositions made by sintering a mixture of MB₂, M'C and SiC wherein M and M' are the same or different metal and are selected from the group consisting essentially of zirconium, hafnium and mixture thereof. Particularly, the starting materials to be sintered, i.e. ZrB₂, ZrC, SiC and HfB₂, are commercially available.

US 5,217,816 relates to a method whereby ceramic forming elements react in a solvent metal to form a finely-divided dispersion of the ceramic material in the solvent metal matrix. Particularly, the ceramic-forming constituents most easily combine at or about the melting temperature of the solvent metal, and the exothermic nature of this reaction causes a very rapid temperature elevation or spike, which has the effect of melting additional metal, simultaneously causing the further reaction of the ceramic constituents.

Medri V. et al. [Adv. Eng. Materials, vol. 7, n. 3, 159-163 (2005)] relates to a comparison of ZrB₂-ZrC-SiC composites fabricated by Spark Plasma Sintering and Hot-Pressing, where the starting materials were compositions of ZrB₂, ZrC, SiC and Si₃N₄.

Bellosi A. et al. [Int. J. Appl. Ceramic Tech., vol. 3, n. 1, 32-40 (2006)] similarly to Medri V. et al., relates to suitability and efficacy of the sintering technique known as spark plasma sintering to produce ultra-high-temperature-based Hf and Zr borides. Ceramic-matrix composites in the systems HfB₂-SiC, ZrB₂-MoSi₂, and ZrB₂-ZrC-SiC were processed by spark plasma sintering and hot pressing. HfB₂, SiC, ZrB₂, and MoSi₂, were starting materials commercially available."

New sintering methods where the starting powders, either to be only consolidated or also simultaneously reacted, are crossed by an electric current, were recently developed. Specifically, the so-called Field Activated Pressure Assisted Synthesis (FAPAS) [Heian et al., J. Am. Ceram. Soc., 87(5), 779-783 (2004)] and Spark Plasma Sintering (SPS) [Omori, Mat. Sci. Eng., A 287(2), 183-188, (2000)] apparatuses are based on the above said principle. The two apparatuses basically differ from each other for the type of alternating (FAPAS) or pulsating (SPS) electric current, provided during the sintering process.

Also known is the Self-propagating High temperature Synthesis (SHS) technique, based on the occurrence of strongly exothermic reactions that, once ignited, are able to propagate as a combustion wave through the entire reacting mixture, without requiring any other energy supply. Simple apparatuses, low energy consumption, high combustion temperature (up to 4000 K) and front propagation velocities up to about 25 cm per second are the main characteristics of this technique. As far as the Applicant is aware of, the SHS technique has never been used for preparing high density UHTC materials.

Typically, processes carried out using Spark Plasma Sintering (SPS) apparatuses allow to perform sintering at lower temperatures with respect to traditional Hot Pressing (HP), and shorter times but anyhow sufficient to reach the complete densification of the material.

A comparison of HP and SPS techniques was recently performed during sintering of the UHTC ZrB₂/30vol%ZrC/10vol%SiC composite [Medri et al., Adv. Eng. Mat., 7(3), 159-163 (2005)] and the possibility of obtaining the final material by SPS relatively faster was confirmed. However, this SPS process does not start from elemental powders of Zirconium and Silicon, and from B₄C, but from previously prepared ZrB₂, ZrC and SiC powders, which are mixed in appropriate amounts and subjected to sintering/densification.

### SUMMARY OF THE INVENTION

Now the Applicant has found a process for preparing ZrB₂-SiC-ZrC based UHTC products in bulk form having general formula (I) reported hereinafter, starting from powders of Zirconium (Zr), Boron carbide (B₄C), Silicon (Si) and optionally graphite; this process requires times shorter than that of the prior art processes, and allows yielding highly dense products.

The products obtainable by the present process have to be regarded as UHTC products because, when subjected to high-temperature oxidation resistance measurements, they show low and thermally stable oxidation rate up to 1400°C.

It is therefore subject of the present invention a process for the preparation of a UHTC product in bulk form having general formula (I)

*x* zrB₂ - *y* SiC - *z* ZrC (I)

wherein *x* ranges between 2 and 4,
*y* ranges between 1 and 1.5, and
z ranges between 0 and 4,
said process comprising the following steps:
i) dry mixing Zirconium powder having purity higher than 98.5% and particle size less than 44 µm, Boron carbide powder having purity higher than 99.4%, and Silicon powder having purity higher than 99% and particle size less than 44 µm, and, when the z/x ratio is higher than 0.25, graphite powder having a particle size ranging between 1 and 2 µm, in stoichiometric ratio corresponding to the desired final product of above said general formula (I), thus obtaining a powders mixture;
ii) combustion synthesising and densifying the powders mixture coming from step i) by:
   ii-a) Electric Current Activated Sintering (ECAS) technique; or
   ii-b) Self-propagating High temperature Synthesis (SHS), dry milling of the so obtained combustion synthesised product to yield the product in powder form, and densifying the so obtained powders by Electric Current Activated Sintering (ECAS) technique,
   to obtain the above said UHTC product having general formula (I).

Features and advantages of the present invention will be described in detail in the following description.

### BRIEF DESCRIPTION OF THE DRAWINGS

Figure 1: shows a temperature-time profile measured during the self-propagating combustion synthesis according to the present invention, carried out under operative conditions illustrated in Example 1.
Figure 2: shows the comparison of X-Rays Diffraction (XRD) patterns of starting powders (indicated as "reactants") and the final product (indicated as "SHS product") of the present invention, obtained by self propagating combustion synthesis carried out under operative conditions illustrated in Example 1. □ Zr; ● B₄C; _{*} Si; □ ZrB₂; V SiC.
Figure 3: shows the size distribution (cumulative curve) measured by laser light scattering (CILAS 1180) of the powders synthesized by self-propagating combustion after ball milling, carried out under operative conditions illustrated in Example 1.
Figure 4: shows the profiles vs. time of temperature and sample shrinkage, obtained during sintering carried out under operative conditions illustrated in Example 1.
Figure 5: shows a picture of the product of the present invention, obtained by self-propagating combustion and SPS carried out under operative conditions illustrated in Example 1.
Figure 6: shows mass gain during TGA oxidation of the product of the present invention, obtained by self-propagating combustion carried out under operative conditions illustrated in Example 1.
Figure 7: shows the comparison of X-Rays Diffraction (XRD) patterns of starting powders (indicated as "reactants") and the final product (indicated as "SPS product") of the present invention, obtained during synthesis/densification carried out under operative conditions illustrated in Example 4. □ Zr; ● B₄C; _{*} Si; a ZrB₂; V SiC.
Figure 8: shows a picture of the product of the present invention, obtained by synthesis/densification carried out under operative conditions illustrated in Example 4.
Figure 9: shows mass gain during TGA oxidation of the product of the present invention, obtained by synthesis/densification carried out under operating conditions illustrated in Example 4.

### DETAILED DESCRIPTION OF THE INVENTION

According to the present invention by the expression "Electric Current Activated Sintering technique" and corresponding acronym "ECAS" the above said Field Activated Pressure Assisted Synthesis (FAPAS) and Spark Plasma Sintering (SPS) techniques are meant, as well as the techniques known as "Plasma Assisted Sintering" (PAS), "Pulsed Electric Current Sintering" (PECS), "Electric Pulse Assisted Consolidation" (EPAC), and "Electro Discharge Compaction" (EDC), or other equivalent techniques.

According to the present invention, the powders mixture coming from step i) may be subjected in step ii) to the SHS and/or ECAS techniques, i.e. the powders coming from step i) are subjected to the SHS and then to the ECAS technique, or to the ECAS technique only.

In the first embodiment, the combustion synthesis of the powders mixture coming from step i) by SHS technique is carried out and the so obtained product is then subjected to densification by using the ECAS technique; before applying the ECAS technique, the product coming from SHS is subjected to dry milling to convert it in powder form.

Alternatively, in the second embodiment, the powders mixture coming from step i) are subjected in step ii) to the ECAS technique, that performs both the product synthesis and densification in a single step.

In both alternative embodiments, in step ii) the powders mixture and the graphite die containing them are crossed by an electric current; this generates a rapid heating of the powder and, consequently, the final bulk UHTC product is obtained in a relatively faster manner as compared to conventional sintering techniques.

According to the invention, amongst the UHTC products obtainable by the present process preferred is the product consisting of ZrB₂ and SiC with ZrB₂/SiC molar ratio equal to 2/1, which is equivalent to about ZrB₂-25 vol. %SiC, i.e. the product of general formula (I) above reported, wherein *x* is 2, *y* is 1 and z is 0.

By the term "relative density" referred to the density of the UHTC products obtained by the present process, the percentage density with respect to the theoretical density of the corresponding UHTC product, is meant.

In the step i) of the present process, the starting reacting powders, for example Zirconium, Boron Carbide, Silicon and optionally graphite powders available on the market, are dry mixed under a stoichiometric ratio corresponding to the desired ZrB₂-SiC-ZrC composite, before undergoing to the subsequent step ii).

According to the invention, starting reactants in powder form are preferably Zirconium powder with purity greater than 98.5 % and particle size less than 44 µm, Boron Carbide powder with purity greater than 99.4 %, Silicon powder with purity greater than 99 % and particle size less than 44 µm, and graphite powder having particle size comprised between 1 and 2 µm.

According to the invention, when the desired UHTC product has general formula (I) in which z/x ratio is higher than 0.25, graphite powder is added in step i) of the present process in suitable amount following the stoichiometry of the desired UHTC product.

In the first embodiment of the process according to the invention, the powders mixture coming from step i) is preferably uniaxially pressed to form cylindrical pellets having for example a diameter of about 16 mm, height of 30 mm, and a green density of about 50% of the theoretical value; the so obtained pellets are then positioned inside a stainless steel reaction chamber suitable for the application of the SHS technique. The combustion front is generated at one end of the sample by using a heated tungsten coil, which is immediately turned off as soon as the reaction was initiated. Then, the reaction self-propagates until reaches the opposite end of the sample in about 4-5 seconds. The so obtained combustion-synthesised UHTC product is then converted in powder form by dry milling before being consolidated by ECAS technique; more preferably, the product is dry milled so that a powder with particles size less than 25 µm is obtained; for example, this result is obtained for 4 g of the above said product synthesised by SHS, by using a SPEX mixer mill 8000 with two steel balls (11.5 mm diameter, 6.5 g weight) for 20 minutes.

The so obtained powder is then subjected to consolidation by ECAS technique, by placing the powder inside a cylindrical graphite mould equipped with two plungers, which is then inserted in an electric circuit.

Preferably, before the sintering process by ECAS being started, the powder sample is subjected to a pre-compaction step, consisting for example in the application for 30 min of 7 kN mechanical load through the plungers, equivalent to a mechanical pressure of 40 MPa, when considering the sample surface subjected to the external load equal to the cross section of the graphite cylindrical plungers with 14.7 mm diameter.

Once this circuit is closed, an electric current passes through the reacting mixture with subsequent heat production by "Joule effect". The intensity of the electric current during ECAS process depends on the temperature-time cycle selected and is changed accordingly by the controller of the sintering apparatus.

Regarding the temperature-time profile chosen during this step, preferably the time necessary to bring the temperature from the room temperature to the value of at least 1800°C, which is the preferred one in the first embodiment of the process where ECAS follows the SHS technique, is 10 minutes and this value is maintained constant for further 10 minutes; therefore the total time required in this step to obtain a near-full dense UHTC product having a relative density greater than 99.9% of the theoretical value is 20 minutes.

Anyway, according to the invention, good results in terms of relative density of the final products (i.e. a relative density greater than 96%) may be obtained bringing the temperature from the room temperature to the value of at least 1600°C in 10 minutes and maintaining this value constant for further at least 10 minutes.

The heat generated by the flow of the above mentioned electric current generates a rapid heating, thus providing the necessary energy to activate sintering phenomena. The simultaneous application of the mechanical load acting in axial direction gives also the possibility to obtain the densification of the final product.

Preferably, the internal surface of the mould is before hand lined through a graphite foil in order to preserve sample integrity and to facilitate sample release from the mould at the end of the process. For the same reason, a graphite foil is placed between the reacting mixture and the plungers surface in contact with it. Subsequently, the mould together with the two graphite plungers is placed inside the reaction chambers of the ECAS apparatus where the vacuum is achieved.

The mechanical load applied and maintained constant during this step, is at least equal to 3.5 kN, which is equivalent to a mechanical pressure of 20 MPa, when considering the sample surface subjected to the external load equal to the cross section of the graphite cylindrical plungers with 14.7 mm diameter.

The rapid heating generated by the electric current flow provides energy in sufficient amount as to activate not only sintering phenomena but also the reaction synthesis for the formation of the desired UHTC product from Zr, B₄C, Si and optionally graphite powders in the second embodiment of the present process, as described above, wherein the powders mixture is directly subjected to ECAS technique. In this second embodiment of the process, the maximum temperature value to which the sample has to be brought during ECAS is preferably 1900°C, the total time required to obtain a near full dense (≥ 99.9% of the theoretical density) product being preferably the same as said above, i.e. 20 minutes (10 minutes for bringing temperature from room value to the maximum value and 10 minutes in which the maximum value is maintained).

Anyway, according to the invention, good results in terms of relative density of the final products (i.e. a relative density greater than 96%) may be obtained bringing the temperature from the room temperature to the value of at least 1850°C in 10 minutes and maintaining this value constant for further at least 20 minutes.

During this period, a constant mechanical load equal to 3.5 kN, which is equivalent to a mechanical pressure of 20 MPa when considering the sample surface subjected to the external load equal to the cross section of the graphite cylindrical plungers with 14.7 mm diameter and 30 mm height, is applied.

The mechanical pressure is applied in both embodiments only through the lower electrode while the upper is maintained fixed; in particular, the lower electrode acts in the vertical direction due to hydraulic pump to which it is connected.

During ECAS in both embodiments of the process, the instantaneous values of the applied current, voltage and temperature measured through a thermocouple embedded in a hole on the lateral surface of the graphite mould, mechanical load, as well as the displacement of the lower electrode along the vertical axis starting from its initial position, are recorded.

The above said displacement is commonly considered as a densification degree of the compact powders placed inside the mould. As a matter of fact, as densification takes place, following to the volume change of the powder compact, the lower electrode, free to move, tends to go up while the mechanical load is maintained. However, it is important to note that the displacement is not a unique index of the density level since it is affected also by the dimensional changes taking place in the graphite parts as well as in the electrodes, due to mechanical compression and thermal expansion. The exact degree of densification can be obtained only through density measurements of the sample obtained at the end of the ECAS process, as carried out in the following examples.

Typically, after the synthesis/sintering step, the mould is allowed to cool while maintaining the applied mechanical load until room temperature is reached, then the reacting/sintering chamber is allowed to reach the atmospheric pressure, and finally the UHTC product is extracted from the mould.

The UHTC products obtainable by the process of the invention can be prepared in any form and shape according to the shape of the mould used in the preparation process. These products possess relatively high temperature oxidation resistance properties and are useful in those applications where a thermal protection system at high temperature is required, for example they can be used for the manufacture of nose cap and wings leading edges of space vehicles.

The following examples are reported as non-limiting illustration of the present invention.

### EXAMPLE 1

The SPS-515S apparatus from Sumitomo Coal Mining Co., Ltd. has been used: this apparatus combines an hydraulic press capable to provide a mechanical load up to 50 kN, with a DC pulse current generator (10 V, 1500 A, 300 Hz).

The starting reactants consisting of Zirconium (Zr), boron carbide (B₄C) and silicon (Si) in powder form, are the following commercial products:
- Zirconium (particle size < 44µm, purity > 98.5 %) sold by Alfa-Aesar,
- Boron carbide (purity > 99.4 %) sold by Alfa-Aesar, and
- Silicon (particle size < 44µm, purity > 99 %) sold by Aldrich.

The three reactants in powder form have been previously dry mixed in a stoichiometric ratio corresponding to the 2ZrB₂-SiC UHTC product (i.e. the product wherein the ZrB₂/SiC molar ratio is equal to 2/1) using a SPEX shaker mill for about 30 min, then, once the mixture is ready, about 8 g of the mixture was uniaxially pressed to form cylindrical pellets with a diameter of 16 mm, height of 3 cm and a green density of 50 % of the theoretical value.

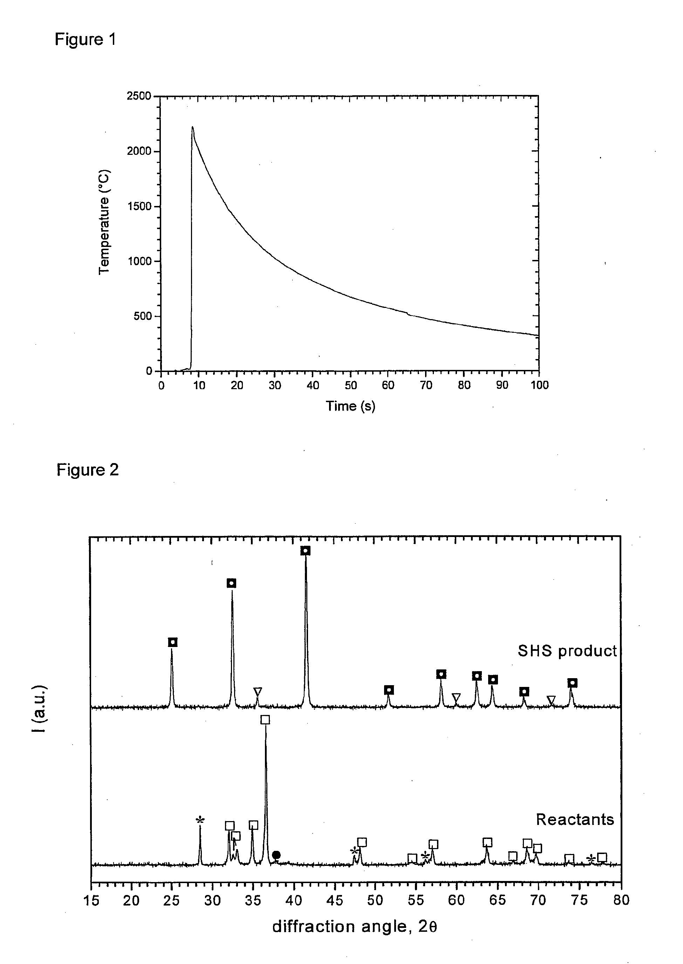

The experimental set-up used to perform self-propagating combustion reactions consists of a reaction chamber, a power supply (Belotti Italy; output 0-100 V) which provides the energy required for the ignition of reaction, a video camera, a video recorder and a computer system equipped with a data acquisition board supported by a software package (Labview, National Instruments). The temperature during the reaction as well as the average velocity of the combustion wave were measured using thermocouples (W-Re, 127 µm diameter, Omega Engineering Inc.) embedded in the sample. The reaction chamber was first evacuated and then filled with argon (atmospheric pressure). This operation was repeated at least twice in order to ensure an inert environment during reaction evolution. The combustion front was generated at one sample end by using of a heated tungsten coil (mod. H2-040, R.D. Mathis Company, USA), placed between two electrodes across which a voltage of 20 Volts was applied, which was immediately turned off as soon as the reaction was initiated. Then, the reaction front travels spontaneously with an average velocity of about 10 mm/s until reaches the opposite end of the sample in about 4-5 s. Figure 1 shows a typical temperature profile, recorded during the self-propagating combustion synthesis of the 2ZrB₂-SiC UHTC product by a thermocouple embedded in the pellet.

It is apparent that the temperature suddenly increases when the combustion wave approaches to the position where the thermocouple is placed, thus reaching its maximum value of about 2200°C. Afterwards, it decreases, but with a smaller rate, until reaching room temperature.

The diffraction patterns of the combustion synthesised product along with the corresponding starting reactants are reported in Figure 2 and show that combustion synthesis proceeds to completion with the formation of ZrB₂ and SiC only.

The obtained product (4 g) is milled (SPEX mixer mill 8000) using 2 steel balls (11.5 mm diameter, 6.5 g weight) for 20 min milling time.

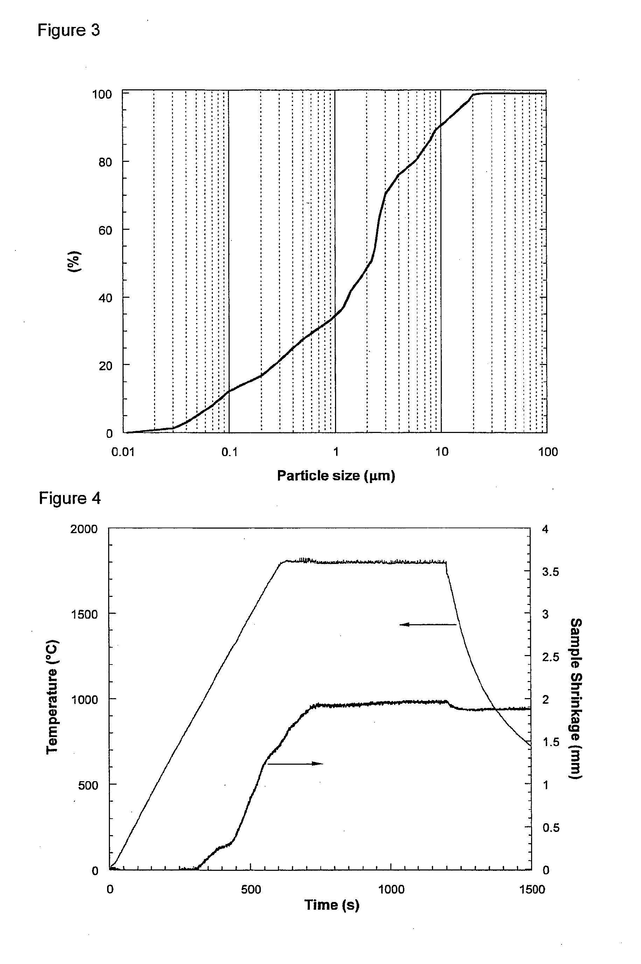

Size distribution of the resulting combustion synthesised-ball milled powder are illustrated in Figures 3. It is seen that the resulting powders have particle size less than 25 µm.

About 3 g of the obtained powders were placed inside a cylindrical graphite mould (internal diameter 15 mm, external diameter 35 mm, height 40 mm).

The internal surface of the mould has been previously lined with a graphite foil (thickness 0.13 mm, purity 99.8%, Alfa Aesar) in order to preserve the mould integrity and to facilitate sample release at the end of the process. For the same reason a graphite foil has been put between the reacting mixture and the plungers surface in contact with it. Both the mould and plungers are made of AT101-type graphite and are supplied by Atal S.r.l.

Then the mould together with the two graphite plungers is placed inside the reaction chamber of the SPS apparatus, which is subsequently evacuated down to 15 Pa.

Before the sintering process being commenced, the powder sample is subjected to a pre-compaction step, consisting in the application of 7 kN mechanical load through the plungers, equivalent to a mechanical pressure of 40 MPa, for 30 min. Then, the mechanical load applied and maintained constant during the sintering process, is decreased to 3.5 kN, which is equivalent to a mechanical pressure of 20 MPa.

The densification of combustion synthesised 2ZrB₂-SiC UHTC product by ECAS is performed by setting a temperature cycle as follows. The temperature is augmented from the room temperature to 1800°C in 10 min and this value is maintained constant for further 10 minutes. The intensity of the electric current was thus automatically adjusted by the controller of the SPS machine and reached its maximum value of approximately 1400 A in about 10 minutes.

Temperature-time profile is reported in Figure 4 along with the corresponding sample shrinkage. The total shrinkage displacement along the vertical axis of the lower electrode from the initial position was equal to about 2 mm.

After the sintering step, the mould is allowed to cool while maintaining the applied mechanical load until the room temperature is reached. The so obtained sample has shown a relative density greater that 99.9% of the theoretical value of 2ZrB₂-SiC UHTC product, that is 5.37 g/cm³.

The total time required for carrying out.sintering to obtain a near-full dense UHTC product is 20 min.

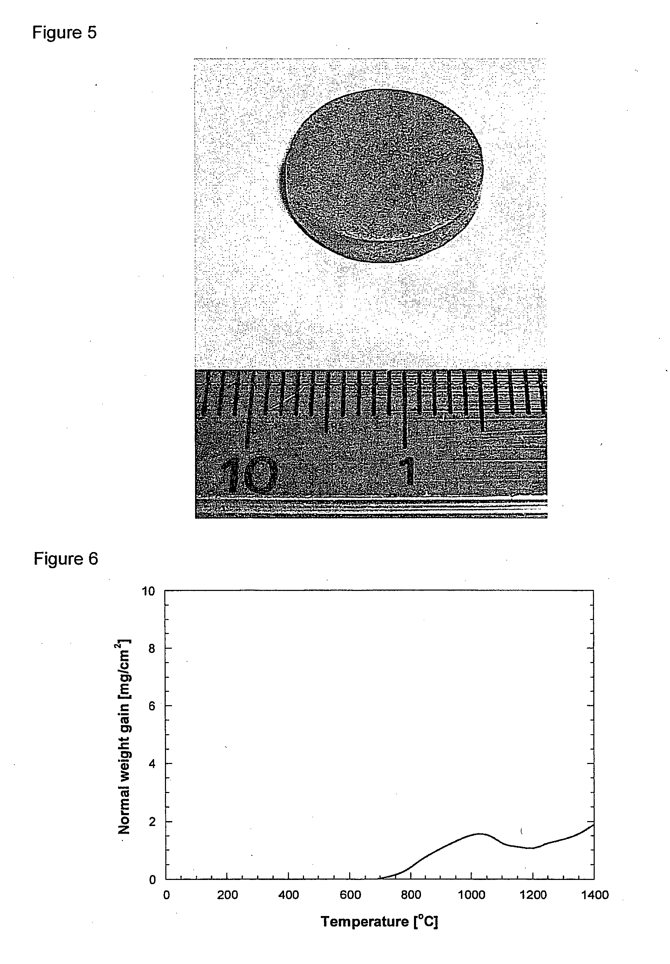

In Figure 5 a picture of the SPS product constituted by the dense 2ZrB₂-SiC UHTC product and obtained as described above, is reported.

Vickers hardness and fracture toughness of obtained sample were determined by Vickers indentation fracture toughness test, as disclosed in C.B. Ponton and R.D. Rawlings Materials Science and Technology, vol. 5, 865-872, (1989).

It was so found that Vickers hardness value using 1 kg load was about 16.7±0.4 GPa while fracture toughness was 5.0±0.3 MPa m^{1/2}.

The oxidation behaviour of the 2ZrB₂-SiC UHTC product obtained as described above, is shown in Figure 6, where the results of the thermogravimetric analysis (TGA) using a TA SDA 2969 Simultaneous DTA-TGA Instrument are reported. The sample was heated at 2°C/min up to 1400°C in an oxidising environment. It is found that the present UHTC product shows low and thermally stable oxidation rate up to 1400°C.

### EXAMPLE 2

The densification of combustion synthesised 2ZrB₂-SiC UHTC product by ECAS is performed by setting a temperature cycle as follows. The temperature is augmented from the room to 1600°C in 10 min and this value is maintained constant for further 10 minutes.

Example 2 differs therefore from Example 1 because the maximum temperature has been reduced from 1800°C to 1600°C. All the remaining operating conditions were on the contrary the same as those described above in Example 1.

The so obtained sample of 2ZrB₂-SiC UHTC product has shown a relative density equal to 97.6% of the theoretical value.

### EXAMPLE 3

The densification of combustion synthesised "ZrB₂-SiC UHTC product" by ECAS is performed by setting a temperature cycle as follows. The temperature is augmented from the room to 1600°C in 10 min and this value is maintained constant for further 20 minutes.

Example 3 differs therefore from Example 2 because the total sintering time has been increased from 20 to 30 minutes. All the remaining operating conditions were on the contrary the same as those described above in Example 2.

The so obtained sample 2ZrB₂-SiC UHTC product has shown a relative density equal to 99.8% of the theoretical value.

### EXAMPLE 4

The SPS-515S apparatus from Sumitomo Coal Mining Co., Ltd. is used. Moreover, the starting reactants mixture already described in Example 1 is used.

The three reactants in powder form have been dry mixed in a stoichiometric ratio corresponding to 2ZrB₂-SiC UHTC product (ZrB₂/SiC molar ratio equal to 2/1), (see details in Example 1), then they are directly subjected to the ECAS process. About 3 g of the mixture were placed inside a cylindrical graphite mould.

Details regarding dies, plungers and sample preparation for ECAS are the same as described above in Example 1.

Before the synthesis/densification process being started, the powder sample is subjected to a pre-compaction step, consisting in the application of 7 kN mechanical load through the plungers, equivalent to a mechanical pressure of 40 MPa, for 30 min. Then, the mechanical load applied and maintained constant during the sintering process, is decreased to 3.5 kN, which is equivalent to a mechanical pressure of 20 MPa.

The synthesis and simultaneous densification of "ZrB₂-SiC UHTC product" by ECAS is performed by setting a temperature cycle as follows. The temperature is augmented from the room to 1900°C in 10 min and this value is maintained constant for 10 additional minutes. The intensity of the electric current was thus automatically adjusted by the controller of the SPS machine and reached its maximum value of approximately 1450 A at about 10 minutes. The total shrinkage displacement along the vertical axis of the lower electrode from the initial position was equal to about 3 mm.

After the synthesis/densification step, the mould is allowed to cool while maintaining the applied mechanical load until the room temperature is reached. The so obtained sample has shown a relative density greater than 99.9% of the theoretical value.

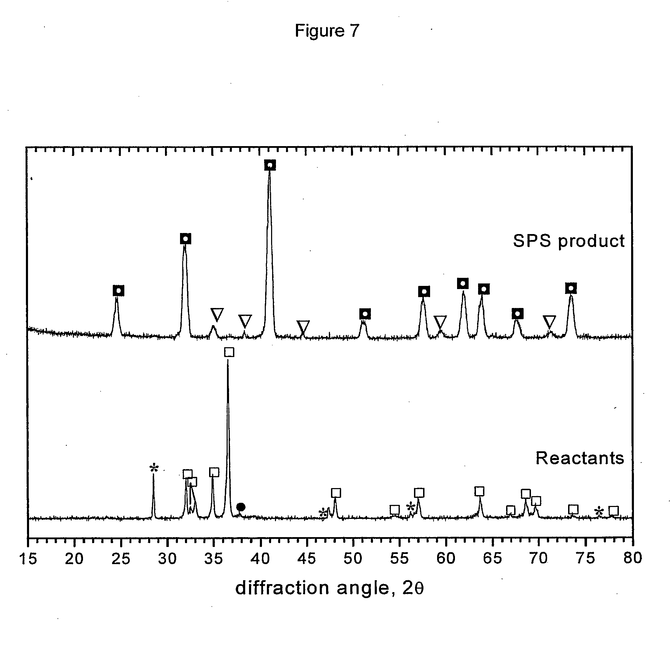

The diffraction patterns of the product obtained after synthesis/densification along with the corresponding starting reactants are reported in Figure 7 and show that during the ECAS process, synthesis reaction goes to completion with the formation of ZrB₂ and SiC only.

Therefore the total time required for the sintering/densification according to the invention, thus obtaining a near-full dense UHTC product is 20 min.

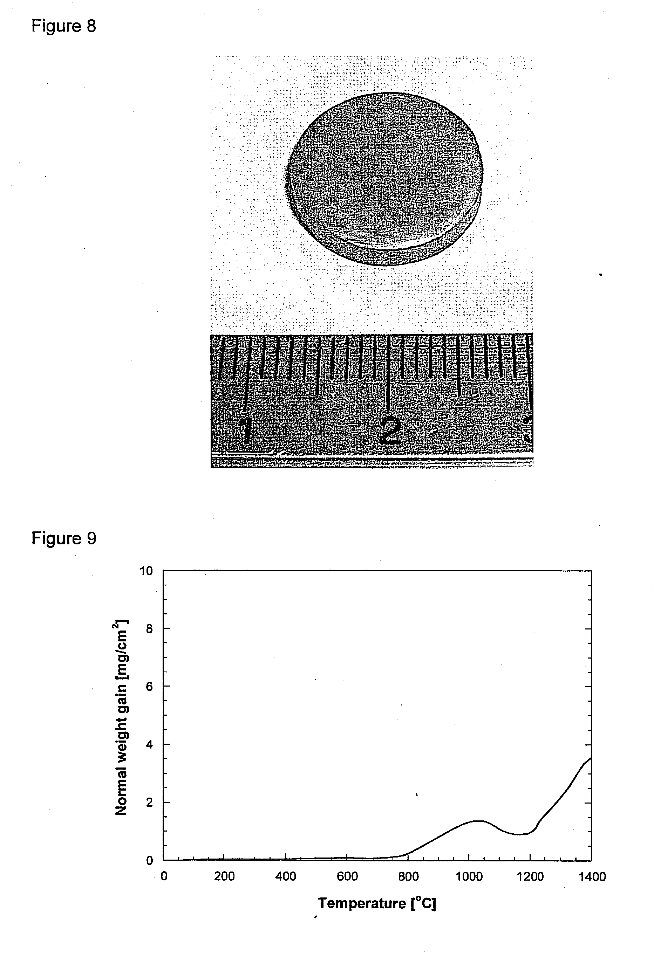

In Figure 8 a picture of the SPS product constituted by the dense 2ZrB₂-SiC UHTC product and obtained as described above, is reported.

Vickers hardness and fracture toughness of obtained sample were also determined as described above in Example 1. It was found that Vickers hardness value measured by an indentation method using 1 kg load was about 15.9±0.4 GPa while fracture toughness was 5.0±0.8 MPa m^{1/2}.

The oxidation behaviour of the obtained 2ZrB₂-SiC UHTC product is shown in Figure 9, where the results of the thermogravimetric analysis (TGA) using a TA SDA 2969 Simultaneous DTA-TGA Instrument are reported. The sample was heated at 2°C/min up to 1400°C in an oxidising environment as described above in Example 1. It is apparent that the obtained UHTC product shows low and thermally stable oxidation rate up to 1400°C.

### EXAMPLE 5

The synthesis and simultaneous densification of 2ZrB₂-SiC UHTC product by ECAS is performed by setting a temperature cycle as follows. The temperature is augmented from the room to 1900°C in 10 min and this value is maintained constant for 5 more minutes.

Example 5 differs therefore from Example 4 because the total sintering time has been decreased from 20 to 15 minutes. All the remaining operating conditions were on the contrary the same as those described above in Example 4.

The so obtained sample of 2ZrB₂-SiC UHTC product has shown a relative density equal to 98.5% of the theoretical value.

### EXAMPLE 6

The synthesis and simultaneous densification of 2ZrB₂-SiC UHTC product by ECAS is performed by setting a temperature cycle as follows. The temperature is augmented from the room temperature to 1850°C in 10 min and this value is maintained constant for further 20 minutes.

Example 6 differs therefore from Example 4 because the maximum temperature has been reduced from 1900°C to 1850°C and total sintering time has been increased from 20 to 30 minutes. All the remaining operating conditions were on the contrary the same as those described above in Example 4.

The so obtained sample of 2ZrB₂-SiC UHTC product has shown a relative density greater than 96.3% of the theoretical value.

## Claims

1. A process for the preparation of a UHTC product in bulk form having general formula (I)
*x* ZrB₂ - *y* SiC - z ZrC (I)
wherein *x* ranges between 2 and 4,
*y* ranges between 1 and 1.5, and
*z* ranges between 0 and 4,
said process comprising the following steps of:
i) dry mixing Zirconium powder having purity higher than 98.5% and particle size less than 44 µm, Boron carbide powder having purity higher than 99.4%, and Silicon powder having purity higher than 99% and particle size less than 44 µm, and, when the z/x ratio is higher than 0.25, graphite powder having a particle size ranging between 1 and 2 µm, in stoichiometric ratio corresponding to the desired final product of above said general formula (I), thus obtaining a powders mixture;
ii) combustion synthesising and densifying the powders mixture coming from step i) by:
ii-a) Electric Current Activated Sintering (ECAS) technique; or
ii-b) Self-propagating High temperature Synthesis (SHS), dry milling of the so obtained combustion synthesised product to yield the product in powder form, and densifying the so obtained powders by Electric Current Activated Sintering (ECAS) technique,
to obtain the above said UHTC product having general formula (I).

2. The process according to claim 1, wherein the powders mixture coming from step i) is subjected in step ii) to the combustion synthesis by SHS technique, thus obtaining a product which is converted in the powder form and then subjected to the ECAS technique.

3. The process according to claim 1, wherein the powders mixture coming from step i) is subjected in step ii) to the synthesis and simultaneous densification by ECAS technique.

4. The process according to claim 2, wherein the powders mixture coming from step i), before being subjected to the SHS technique, is uniaxially pressed to form cylindrical pellets.

5. The process according to claim 2, wherein said product in powder form is obtained by dry milling until particles size less than 25 µm is obtained.

6. The process according to claim 2, wherein said product in powder form is subjected to a pre-compaction step before application of ECAS technique.

7. The process according to claim 6, wherein said pre-compaction step is carried out by placing said product in powder form inside a cylindrical graphite mould equipped with two plungers having 14.7 mm diameter and 30 mm height, and by applying for 30 minutes a mechanical load of 7 kN through the plungers.

8. The process according to claim 2 or 3, wherein said ECAS technique in step ii) is carried out by placing the product in a mould equipped with two graphite plungers having 14.7 mm diameter and 30 mm height, and applying a mechanical load of at least 3.5 kN through the plungers, which is maintained constant during application of said ECAS technique.

9. The process according to claim 2, wherein during application of said ECAS technique in step ii), the temperature is brought from the room temperature to the value of at least 1600°C in 10 minutes and this value is maintained constant for further at least 10 minutes.

10. The process according to claim 2, wherein during application of said ECAS technique in step ii), the temperature is brought from the room temperature to the value of at least 1800°C in 10 minutes and this value is maintained constant for further 10 minutes.

11. The process according to claim 3, wherein during application of said ECAS technique in step ii), the temperature is brought from the room temperature to the value of at least 1850°C in 10 minutes and this value is maintained constant for further at least 20 minutes.

12. The process according to claim 3, wherein during application of said ECAS technique in step ii), the temperature is brought from the room temperature to the value of at least 1900°C in 10 minutes and this value is maintained constant for further 10 minutes.

13. The process according to any of claims 1-12, wherein said UHTC product in bulk form has general formula (I)
*x* ZrB₂ - *y* SiC - *z* ZrC (I)
wherein x is 2, *y* is 1 and z is 0.

## Patentansprüche

1. Verfahren zum Herstellen eines UHTC-Produkts in Bulk-Form mit der allgemeinen Formel (I)
*x* ZrB₂ - *y* SiC - *z* ZrC (I)
wobei *x* im Bereich zwischen 2 und 4 liegt,
*y* im Bereich zwischen 1 und 1,5 liegt und
*z* im Bereich zwischen 0 und 4 liegt,
wobei das Verfahren folgende Schritte umfasst:
i) Trockenmischen von Zirkoniumpulver, das eine Reinheit von höher als 98,5 % und eine Partikelgröße von kleiner als 44 µm aufweist, Borcarbidpulver, das eine Reinheit von höher als 99,4 % aufweist, und Siliciumpulver, das eine Reinheit von höher als 99 % und eine Partikelgröße von kleiner als 44 µm aufweist, und, wenn das *z*/*x-*Verhältnis höher als 0,25 ist, Graphitpulver, das eine Partikelgröße im Bereich zwischen 1 und 2 µm aufweist, in stöchiometrischem Verhältnis entsprechend dem gewünschten Endprodukt der vorstehenden allgemeinen Formel (I), um so ein Pulvergemisch zu erhalten;
ii) Verbrennungssynthetisieren und Verdichten des aus Schritt i) kommenden Pulvergemischs durch:
ii-a) elektrischer-Strom-aktiviertes-Sinter(ECAS)-Verfahren; oder
ii-b) selbstpropagierende Hochtemperatursynthese (SHS), Trockenmahlen des so erhaltenen verbrennungssynthetisierten Produkts, um das Produkt in Pulverform zu erhalten, und Verdichten des so erhaltenen Pulvers durch ein elektrischer-Strom-aktiviertes-Sinter(ECAS)-Verfahren,
um das vorstehend genannte UHTC-Produkt mit der allgemeinen Formel (I) zu erhalten.

2. Verfahren gemäß Anspruch 1, wobei das aus Schritt i) kommende Pulvergemisch in Schritt ii) der Verbrennungssynthese durch SHS-Verfahren unterzogen wird, um so ein Produkt zu erhalten, das in die Pulverform umgewandelt und dann dem ECAS-Verfahren unterzogen wird.

3. Verfahren gemäß Anspruch 1, wobei das aus Schritt i) kommende Pulvergemisch in Schritt ii) der Synthese und gleichzeitigen Verdichtung durch ECAS-Verfahren unterzogen wird.

4. Verfahren gemäß Anspruch 2, wobei das aus Schritt i) kommende Pulvergemisch, bevor es dem SHS-Verfahren unterzogen wird, uniaxial gepresst wird, um zylindrische Pellets zu bilden.

5. Verfahren gemäß Anspruch 2, wobei das Produkt in Pulverform durch Trockenmahlen bis zum Erhalten einer Partikelgröße von weniger als 25 µm erhalten wird.

6. Verfahren gemäß Anspruch 2, wobei das Produkt in Pulverform einem Vorkompaktierungsschritt vor dem Anwenden des ECAS-Verfahrens unterzogen wird.

7. Verfahren gemäß Anspruch 6, wobei der Vorkompaktierungsschritt durchgeführt wird, indem das Produkt in Pulverform in einer zylindrischen Graphitform angeordnet wird, die mit zwei Stempeln mit einem Durchmesser von 14,7 mm und einer Höhe von 30 mm ausgestattet ist, und eine mechanische Last von 7 kN durch die Stempel 30 Minuten angewendet wird.

8. Verfahren gemäß Anspruch 2 oder 3, wobei das ECAS-Verfahren in Schritt ii) durchgeführt wird, indem das Produkt in einem Formwerkzeug angeordnet wird, das mit zwei Graphitstempeln mit einem Durchmesser von 14,7 mm und einer Höhe von 30 mm ausgestattet ist, und eine mechanische Last von wenigstens 3,5 kN durch die Stempel angewendet wird, die während der Anwendung des ECAS-Verfahrens konstant gehalten wird.

9. Verfahren gemäß Anspruch 2, wobei während der Anwendung des ECAS-Verfahrens in Schritt ii) die Temperatur innerhalb von 10 Minuten von Raumtemperatur auf den Wert von wenigstens 1600 °C gebracht und dieser Wert wenigstens weitere 10 Minuten konstant gehalten wird.

10. Verfahren gemäß Anspruch 2, wobei während der Anwendung des ECAS-Verfahrens in Schritt ii) die Temperatur innerhalb von 10 Minuten von Raumtemperatur auf den Wert von wenigstens 1800 °C gebracht und dieser Wert weitere 10 Minuten konstant gehalten wird.

11. Verfahren gemäß Anspruch 3, wobei während der Anwendung des ECAS-Verfahrens in Schritt ii) die Temperatur innerhalb von 10 Minuten von Raumtemperatur auf den Wert von wenigstens 1850 °C gebracht und dieser Wert wenigstens weitere 20 Minuten konstant gehalten wird.

12. Verfahren gemäß Anspruch 3, wobei während der Anwendung des ECAS-Verfahrens in Schritt ii) die Temperatur innerhalb von 10 Minuten von Raumtemperatur auf den Wert von wenigstens 1900 °C gebracht und dieser Wert weitere 10 Minuten konstant gehalten wird.

13. Verfahren gemäß einem der Ansprüche 1-12, wobei das UHTC-Produkt in Bulk-Form die allgemeine Formel (I) aufweist,
*x* ZrB₂ - *y* SiC - *z* ZrC (I)
wobei *x* 2 ist, *y* 1 ist und *z* 0 ist.

## Revendications

1. Procédé de préparation d'un produit composite à ultrahaute température (UHTC) en vrac de formule générale (I)
*x*ZrB₂-*y*SiC-*z*ZrC (I)
dans laquelle *x* varie entre 2 et 4,
*y* varie entre 1 et 1,5, et
*z* varie entre 0 et 4,
ledit procédé comprenant les étapes suivantes consistant à :
i) mélanger à sec de la poudre de zirconium ayant une pureté supérieure à 98,5 % et une taille de particule inférieure à 44 µm, de la poudre de carbure de bore ayant une pureté supérieure à 99,4 %, et de la poudre de silicium ayant une pureté supérieure à 99 % et une taille de particule inférieure à 44 µm, et, lorsque le rapport z/x est supérieur à 0,25, la poudre de graphite ayant une taille de particule variant entre 1 et 2 µm, dans un rapport stoechiométrique correspondant au produit final souhaité de ladite formule générale (I) ci-dessus, en obtenant ainsi un mélange de poudres ;
ii) synthétiser par combustion et densifier le mélange de poudres provenant de l'étape i) par :
ii-a) la technique de frittage activé par courant électrique (ECAS pour Electric Current Activated Sintering) ; ou
ii-b) la synthèse à haute température autopropagée (SHS pour Self-propagating High Temperature Synthesis), le broyage à sec du produit synthétisé par combustion ainsi obtenu pour donner le produit sous forme de poudre, et la densification des poudres ainsi obtenues par la technique de frittage activé par courant électrique (ECAS),
afin d'obtenir ledit produit UHTC ci-dessus de formule générale (I).

2. Procédé selon la revendication 1, dans lequel le mélange de poudres provenant de l'étape i) est soumis dans l'étape ii) à la synthèse par combustion par la technique SHS, en obtenant ainsi un produit qui est transformé en la forme de poudre puis soumis à la technique ECAS.

3. Procédé selon la revendication 1, dans lequel le mélange de poudres provenant de l'étape i) est soumis dans l'étape ii) à la synthèse et la densification simultanée par la technique ECAS.

4. Procédé selon la revendication 2, dans lequel le mélange de poudres provenant de l'étape i), avant d'être soumis à la technique SHS, est pressé uniaxialement pour former des pastilles cylindriques.

5. Procédé selon la revendication 2, dans lequel ledit produit sous forme de poudre est obtenu par broyage à sec jusqu'à ce qu'une taille de particule inférieure à 25 µm soit obtenue.

6. Procédé selon la revendication 2, dans lequel ledit produit sous forme de poudre est soumis à une étape de précompactage avant l'application de la technique ECAS.

7. Procédé selon la revendication 6, dans lequel ladite étape de précompactage est réalisée en plaçant ledit produit sous forme de poudre à l'intérieur d'un moule en graphite cylindrique équipé de deux plongeurs ayant un diamètre de 14,7 mm et une hauteur de 30 mm, et en appliquant pendant 30 minutes une charge mécanique de 7 kN à travers les plongeurs.

8. Procédé selon la revendication 2 ou 3, dans lequel ladite technique ECAS dans l'étape ii) est réalisée en plaçant le produit dans un moule équipé de deux plongeurs en graphite ayant un diamètre de 14,7 mm et une hauteur de 30 mm, et en appliquant une charge mécanique de 3,5 kN à travers les plongeurs, qui est maintenue constante pendant l'application de ladite technique ECAS.

9. Procédé selon la revendication 2, dans lequel pendant l'application de ladite technique ECAS dans l'étape ii), la température est amenée de la température ambiante à la valeur d'au moins 1 600 °C en 10 minutes et cette valeur est maintenue constante pendant au moins 10 minutes supplémentaires.

10. Procédé selon la revendication 2, dans lequel pendant l'application de ladite technique ECAS dans l'étape ii), la température est amenée de la température ambiante à la valeur d'au moins 1 800 °C en 10 minutes et cette valeur est maintenue constante pendant 10 minutes supplémentaires.

11. Procédé selon la revendication 3, dans lequel pendant l'application de ladite technique ECAS dans l'étape ii), la température est amenée de la température ambiante à la valeur d'au moins 1 850 °C en 10 minutes et cette valeur est maintenue constante pendant au moins 20 minutes supplémentaires.

12. Procédé selon la revendication 3, dans lequel pendant l'application de ladite technique ECAS dans l'étape ii), la température est amenée de la température ambiante à la valeur d'au moins 1 900 °C en 10 minutes et cette valeur est maintenue constante pendant 10 minutes supplémentaires.

13. Procédé selon l'une quelconque des revendications 1 à 12, dans lequel ledit produit UHTC en vrac est de formule générale (I)
*x*ZrB₂-*y*SiC-*z*ZrC (I)
dans laquelle *x* vaut 2, *y* vaut 1 et *z* vaut 0.
